# EUROPEAN PATENT APPLICATION

(11) **EP 0 784 159 A1**
(43) Date of publication of application: **16.07.1997**
(21) Application number: 96121007.7
(22) Date of filing: 30.12.1996
(51) Int. Cl.: F15B 15/14, B62D 33/06, F16F 9/346

(54) **Hydraulic actuator, particularly for tipping an industrial vehicle cab**

(30) Priority: 09.01.1996 IT TO960005
(71) Applicant: FLENCO S.p.A., 10051 Avigliana (IT)
(72) Inventor: The designation of the inventor has not yet been filed
(74) Representative: Franzolin, Luigi

(57) **Abstract**

A hydraulic actuator (1), particularly for tipping an industrial vehicle cab, having a cylinder (2), in turn having a lateral wall (3) and a first and second endpiece (4, 5) connected integrally to opposite ends of the lateral wall (3); and a piston (7) mounted in sliding and sealed manner inside the cylinder (2) and defining two chambers (8, 9) with the lateral wall (3) of the cylinder (2) and with the respective endpieces (4, 5); the hydraulic actuator (1) having a number of bypass passages (31) for connecting the chambers (8, 9) when the piston (7) is positioned close to one (4) of the endpieces (4, 5), and which are formed in the lateral wall (3) of the cylinder (2) so that the lateral wall (3) has a cylindrical inner surface (33, 34).

## Description

The present invention relates to a hydraulic actuator, particularly for tipping an industrial vehicle cab in relation to the vehicle frame, to which application the following description refers purely by way of example.

From European Patent EP0101129, double-acting hydraulic actuators are known, which substantially comprise a cylinder, in turn comprising a lateral wall, a bottom endpiece hinged to the frame of an industrial vehicle, and a top endpiece with a through hole; a piston mounted in sliding and sealed manner inside the cylinder, and defining two chambers with the lateral wall and respective endpieces of the cylinder; and a rod engaging the hole in the top endpiece in sliding and sealed manner, and having one end connected integrally to the piston, and an opposite end projecting outwards from the cylinder and hinged to the vehicle cab. The lateral wall of the cylinder is of constant thickness, and, at the bottom end, comprises a number of longitudinal grooves for bypass connecting the aforementioned chambers to permit a small amount of oscillation of the piston about its bottom limit position, and so permit relative oscillation of the frame and cab as the vehicle is moving. The grooves are equally spaced angularly, and are formed by deforming the lateral wall of the cylinder radially outwards.

Hydraulic actuators of the type briefly described above present the following drawback.

On account of the grooves, the inner surface of the lateral wall of the cylinder is of irregular shape, so that oscillation of the piston inside the cylinder results in uneven wear of the piston seal, which is particularly severe at the sliding portions between the grooves.

It is an object of the present invention to provide a hydraulic actuator, particularly for tipping an industrial vehicle cab, designed to eliminate the aforementioned drawback typically associated with known hydraulic actuators.

According to the present invention, there is provided a hydraulic actuator, particularly for tipping a cab of an industrial vehicle, comprising:
- a cylinder defined by a lateral wall and by a first and second endpiece connected integrally to opposite ends of the lateral wall;
- a piston mounted in sliding and sealed manner inside said cylinder, and defining two chambers with said lateral wall of the cylinder and with respective said endpieces;
- a rod having a first end connected integrally to said piston, and a second end projecting outwards from said cylinder; and
- connecting means for bypass connecting said chambers along at least one portion of the travel of said piston inside said cylinder;
characterized in that said connecting means comprise at least one passage formed in said lateral wall of the cylinder; said lateral wall having a cylindrical inner surface.

A preferred, non-limiting embodiment of the present invention will be described by way of example with reference to the accompanying drawings, in which:
Figure 1 shows a section of a hydraulic actuator, particularly for tipping an industrial vehicle cab, in accordance with the present invention;
Figure 2 shows a larger-scale section along line II-II in Figure 1;
Figure 3 shows a larger-scale section of a detail of the hydraulic actuator in Figure 1.

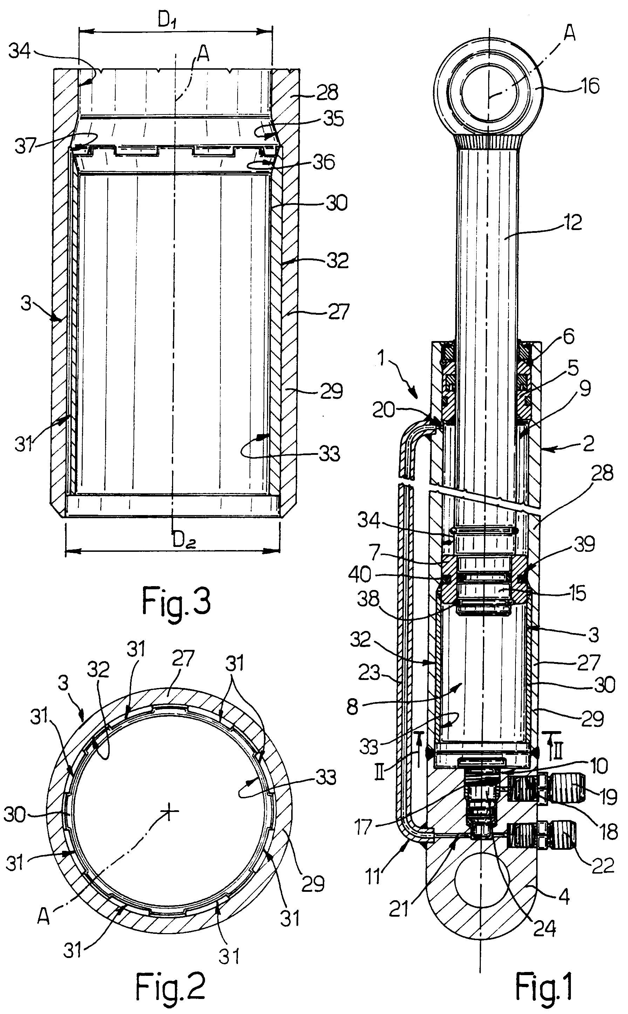

Number 1 in Figure 1 indicates a hydraulic actuator for tipping a cab (not shown) of an industrial vehicle (not shown) in relation to the frame (not shown) of the vehicle.

Actuator 1 is a double-acting type, and comprises a cylinder 2 of axis A, in turn comprising a lateral wall 3, a bottom endpiece 4 welded integrally to one end of wall 3 and hinged to the vehicle frame in known manner (not shown), and a top endpiece 5 defined by a sleeve of axis A, fitted in sealed manner inside the opposite end of wall 3, and connected integrally to the end of wall 3 by an elastic thrust ring 6 integral with wall 3.

Actuator 1 also comprises a piston 7 sliding in sealed manner inside cylinder 2, and defining, with wall 3 and respective endpieces 4, 5, two chambers 8, 9 communicating with a hydraulic pump unit (not shown) via respective conduits 10, 11; and a rod 12 of axis A, engaging endpiece 5 in sliding and sealed manner, and having one end 15 connected integrally to piston 7, and an opposite end 16 projecting outwards of cylinder 2 and hinged to the vehicle cab in known manner (not shown).

More specifically, conduit 10 is defined by a dead hole 17 of axis A, formed in endpiece 4 and communicating with chamber 8; and by a radial dead hole 18 also formed in endpiece 4, and which communicates with hole 17 and houses a fitting 19 for connection to the pump unit.

Conduit 11 is defined by a radial through hole 20 formed in wall 3 close to endpiece 5; by a further radial through hole 21 formed in endpiece 4, intersecting the dead end of hole 17, and housing a fitting 22 for connection to the pump unit; and by a tubular longitudinal portion 23 welded to the outside of wall 3 and communicating at opposite ends with holes 20 and 21.

Hole 17 houses in sealed manner a nonreturn valve 24, which separates hole 21 and chamber 8 in sealed manner, and which is driven by the pressure in hole 21 to connect chamber 8 to fitting 19.

According to the present invention, lateral wall 3 of cylinder 2 comprises a tubular jacket 27 (Figures 2 and 3) having a top portion 28 with an inside diameter D₁, and a bottom end portion 29 with an inside diameter D₂ larger than diameter D₁; and a bush 30 interference-fitted inside portion 29 of jacket 27.

Bush 30 comprises a number of angularly equally spaced longitudinal grooves 31 formed on its outer surface 32 and defining a number of conduits for bypass connecting chambers 8 and 9 when piston 7 is positioned close to endpiece 4.

Bush 30 has an inside diameter equal to D₁, so that the inner surface 33 of bush 30 defines an extension of the inner surface 34 of portion 28, and is longer than the axial extension of piston 7; and grooves 31 extend along the full length of bush 30.

At their adjacent axial ends, top portion 28 of tubular jacket 27 and bush 30 comprise respective conical inner bevels 35, 36 defining an annular recess 37 communicating with grooves 31.

According to a preferred embodiment, bush 30 is made of aluminium alloy, and inner surface 33 is hardened galvanically to achieve a high degree of wear resistance.

Piston 7 (Figure 1) comprises an annular body externally connected integral with rod 12 by means of an elastic thrust ring 38, which is integral with rod 12 and comprises an annular groove 39 formed on its outer surface and housing a seal 40 cooperating with surfaces 33 and 34 of wall 3.

In actual use, piston 7 slides along surfaces 33 and 34 between a withdrawn position in which it is adjacent to endpiece 4, and a forward position in which it is adjacent to endpiece 5; and the vehicle cab is tipped in relation to the frame by feeding pressurized fluid into both chambers 8 and 9 via respective conduits 10 and 11. By virtue of the structure of actuator 1, the fluid in chamber 8 acts both on the annular face of piston 7 facing endpiece 4, and on end 15 of rod 12; whereas the fluid in chamber 9 only acts on the annular face of piston 7 facing endpiece 5. Consequently, with the same fluid pressure in chambers 8 and 9, the thrust exerted on piston 7 and rod 12 by the fluid in chamber 8 is greater than that exerted by the fluid in chamber 9, so that piston 7 and rod 12 are moved towards endpiece 5 to bring piston 7 into the forward position.

To reset the cab to the idle position, pressurized fluid is fed solely into chamber 9 via conduit 11; valve 24 switches to allow the fluid in chamber 8 to flow into fitting 19; and piston 7 is pushed into the withdrawn position.

When the vehicle is moving, piston 7 is housed inside bush 30, thus permitting bypass connection of chambers 8 and 9, and a small amount of oscillation of piston 7 about the withdrawn position to permit relative oscillation of the frame and cab when the vehicle is moving.

The advantages of hydraulic actuator 1 according to the teachings of the present invention will be clear from the foregoing description.

In particular, the inner surface of lateral wall 3 is cylindrical, even the portion defined by bush 30 and at which piston 7 oscillates, so that oscillation of piston 7 does not result in uneven wear of seal 40, the working life of which is thus extended.

Moreover, the wear resistance of bush 30 is further enhanced by surface hardening inner surface 33.

Clearly, changes may be made to hydraulic actuator 1 as described and illustrated herein without, however, departing from the scope of the present invention.

In particular, lateral wall 3 of cylinder 2 may be formed in one piece, and the bypass conduit may be formed in the thickness of lateral wall 3.

## Claims

1. A hydraulic actuator (1), particularly for tipping a cab of an industrial vehicle, comprising:
- a cylinder (2) defined by a lateral wall (3) and by a first and second endpiece (4, 5) connected integrally to opposite ends of the lateral wall (3);
- a piston (7) mounted in sliding and sealed manner inside said cylinder (2), and defining two chambers (8, 9) with said lateral wall (3) of the cylinder (2) and with respective said endpieces (4, 5);
- a rod (12) having a first end (15) connected integrally to said piston (7), and a second end (16) projecting outwards from said cylinder (2); and
- connecting means (31) for bypass connecting said chambers (8, 9) along at least one portion of the travel of said piston (7) inside said cylinder (2);
characterized in that said connecting means comprise at least one passage (31) formed in said lateral wall (3) of the cylinder (2); said lateral wall (3) having a cylindrical inner surface (33, 34).

2. A hydraulic actuator as claimed in Claim 1, characterized in that said lateral wall (3) of the cylinder (2) comprises a tubular jacket (27) defining an inner seat (29) extending along said portion of the travel of the piston (7); and a bush (30) coaxial with said tubular jacket (27) and housed inside said seat (29); said passage (31) being formed between said tubular jacket (27) and said bush (30).

3. A hydraulic actuator as claimed in Claim 2, characterized in that said bush (30) comprises at least one longitudinal groove (31) formed on an outer surface (32) of the bush, and which defines said passage and is longer than the axial extension of said piston (7).

4. A hydraulic actuator as claimed in Claim 3, characterized in that said bush (30) comprises a number of said grooves (31) equally spaced angularly in relation to one another.

5. A hydraulic actuator as claimed in any one of the foregoing Claims from 2 to 4, characterized in that said bush (30) comprises an inner surface (33) hardened by a surface treatment.

6. A hydraulic actuator as claimed in Claim 5, characterized in that said bush (30) is made of aluminium alloy, and said treatment is a galvanize treatment.

7. A hydraulic actuator as claimed in any one of the foregoing Claims, characterized in that said first endpiece (4) of the cylinder (2) is hinged to a frame of said vehicle, and said second end (16) of the rod (12) is opposite said first endpiece (4) and hinged to said cab.
